# EUROPEAN PATENT SPECIFICATION

(11) **EP 4 065 875 B1**
(45) Date of publication and mention of the grant of the patent: **22.05.2024**
(21) Application number: 20819838.2
(22) Date of filing: 26.11.2020
(51) Int. Cl.: F16L 59/02, F16L 59/08, F16L 59/13, F16L 55/17, F16L 57/00

(54) **IMPROVED THERMAL INSULATION SHROUD**
VERBESSERTE WÄRMEISOLIERENDE VERKLEIDUNG
ENVELOPPE D'ISOLATION THERMIQUE PERFECTIONNÉE

(30) Priority: 26.11.2019 GB 201917201
(43) Date of publication of application: 05.10.2022
(73) Proprietor: Darchem Engineering Limited, Gloucestershire GL4 3DB (GB)
(72) Inventor: MAYNARD, Jack David Victor, Gloucester Gloucestershire GL1 4NW (GB)
(74) Representative: Gray, James
(86) International application number: PCT/GB2020/053004
(87) International publication number: WO 2021/105675

(56) References cited:
- EP-A2- 2 003 388

## Description

The present invention relates to a thermal insulation. More particularly, the present invention relates to a thermal insulation shroud or heat shield and in particular, though not exclusively, a thermal insulation shroud or heat shield for a conduit containing a heated fluid. The conduit may be a conduit of an aircraft.

Within the field of aircraft construction, thermal insulation shrouds are utilised in combination with conduits within an airframe carrying fluids used for Bleed Air, Environmental Control Systems and Air Conditioning Systems. Such thermal insulation shrouds are utilised to reduce the impact of heat emission from such conduits.

The conduits and shrouds may be situated in either pressurised or unpressurised zones within the airframe. Such zones may experience ambient temperatures ranging from -50 degrees centigrade to +89 degrees centigrade, while the fluid flowing within the conduits may reach +290 degrees centigrade.

In use, the thermal insulation shroud of an aircraft fluid conduit is configured to ensure that the temperature at the location within which the shroud and conduit are located does not exceed +135 degrees centigrade. This is to prevent the overheating of any structures, assemblies or components in the vicinity of the shroud and conduit combination.

The thermal insulation shroud is further configured so as to fulfil a secondary protective function in the event of a leak of heated fluid from the conduit, for example through a hole, fracture or break in a wall of the conduit. The shroud is configured so as to prevent the direct impingement of a jet of heated fluid on structures, assemblies and/or components in the vicinity of the shroud and conduit combination.

A typical thermal insulation shroud for a heated fluid conduit of an aircraft comprises a cured composite shell formed from pre-impregnated sheet that has been cured around a mandrel such that it approximates the shape and configuration of the conduit. In order to fit the shroud to the conduit, circumferential spacer bands of a heat resistant material are firstly secured to the conduit using RTV silicone at intervals along the length of the fluid conduit. The spacer bands are utilised in order to maintain a desired spacing between the conduit and the shroud. Between spacer bands flexible insulation material is circumferentially wrapped around the conduit and then secured with ties. The composite shell is fitted around the conduit and secured using circumferential metallic fastening bands such that portions of the inner surface of the shell rest against the spacer bands and the remainder of the inner surface of the shell is spaced from the outer surface of the conduit. Then, in order to cover any potential sharp edges, the edges of the shell are wrapped with tape.

The insulation shrouds of the type described above are initially fitted during construction of an airframe when there is ample access to the installation location. Such shrouds however require periodic replacement after reaching the end of their service life, or by being damaged accidently or otherwise simply by the harsh environment in which they operate. Replacing the shrouds for businesses that operate and service the aircraft is a time consuming and expensive process as obtaining access to these parts requires full or partial disassembly of surrounding systems on the airframe.

KR20190101946A, US4298554, US9482381, US2015/377406 and US2020/080680 disclose various arrangements of conduit thermal insulation. The primary focus of the arrangements however appears to be maintenance of the temperature of the fluid within the conduit and not the limiting the transmission of heat to structures, assemblies and/or components in the vicinity of the insulated thermal conduit. In addition, the materials used for the arrangements shown in these documents would appear to be unsuitable for fulfilling the secondary protective function noted above, i.e. preventing the direct impingement of a jet of heated fluid on structures, assemblies and/or components in the vicinity of the insulated thermal conduit.

EP2003388 A2 describes an insulating body made of two or more insulating components having outer and inner walls and an intermediate space enclosed by a part of the walls and closed at a region outside of the walls in a gas- and/or liquid tight manner. The walls are provided with a gas- and/or liquid tight polymer-containing fiber composite structure e.g. knit fabric. The intermediate space is formed between the outer and inner walls. A single- or multi-layered gas- and/or liquid tight polymer foil is provided on a common surface of the inner wall and/or the outer wall. The polymer foil is preferably multi-layer and may include one or more metal-containing layers.

According to the present invention there is provided a thermal insulation shroud for a fluid conduit, the shroud comprising first and second shells which are connectable to one another so as to surround the fluid conduit, wherein each shell is formed from a cured composite material, wherein the cured composite material of each shell includes an inner metallic surface that, in use, faces the fluid conduit to which the thermal insulation shroud is fitted, wherein each shell is further provided with at least one spacer element for maintaining a desired spacing between the fluid conduit and the inner metallic surface of each shell.

The cured composite shells are provided with spacer elements that may be formed integrally with the shells during curing thereof. The spacer elements are themselves spaced apart from one another in each shell so as to define a space therebetween for the location and retention of lightweight thermal insulation material. In use, such lightweight thermal insulation material lies in the aforementioned space between the fluid conduit and the composite shell. The lightweight thermal insulation material may comprise, for example, a fibrous insulation material, foamed insulation material or microporous insulation material.

The material of the integrated spacer elements, for example silicone rubber, seeks to prevent thermal bridging by being extruded of a specific cross-section to minimise area in contact. The cross-section may include crenels on the side of the spacer element that, in use, is in contact with the conduit. The silicone rubber may be composed of fillers that decrease compressibility and further decrease thermal conductivity. The fillers may also serve to reduce the overall weight of the spacer elements. Such fillers may include polymeric microspheres mixed at a ratio between 0.5 - 5%Wt. Opacifiers may also be added to minimise transmission of radiant heat from the conduit. Such an opacifier may be composed of a titanium oxide. Other embodiments may use other metal oxides or a combination there of. In an alternative embodiment the spacer element may be adhesive backed for fitting to the inner surface of a composite shell. The use of the integrated spacer element has the added advantage of acting as a thermal bulkhead preventing convective flow within the shroud.

The inner metallic surface of each shell may be defined by a metal foil. The metal foil may be composed of aluminium alloy having a thickness between 9 - 100microns. The foil may be adhered to the composite material of the shell before curing of the composite material to form the shell. This reduces layup time, and further reduces consumable waste in production. The foil may also improve the thermal efficiency of the composite shell by up to 20%

The resin matrix of the composite shell may comprise a bio resin that comes from a 100% natural and sustainable feedstock such as Poly Fufuryl alcohol. This is a high performing thermoset polymer that may be used in this specific application in combination with a woven glass fabric of 300gsm weight. Other embodiments may utilise, for example, cyanate ester, epoxy, or phenolic. It will be appreciated that other types of woven material and resin may be utilised.

The opposed longitudinal edges of the first and second shells preferably overlap one another when the shells are connected to one another. The first and second shells may connected to one another in the region where the opposed longitudinal edges of the shells overlap.

In a preferred embodiment, the connection between the shells may be effected by the provision of a clip arrangement. Such a clip arrangement may include a clip of one of the shells and a clip receiving location of the other of the shells. In such an embodiment, the clip may include an arm and the clip receiving location is configured to receive a portion of the arm.

In an alternative embodiment the clip arm may include a barb, and the clip receiving location may comprise a recess of one of the shells. The recess may be an aperture. In an alternative embodiment, the clip receiving location may be a lip or ledge defined on an inner surface of one of the shells.

The opposed longitudinal edges of the first and second shells overlap one another. In such an embodiment the first and second shells may be releasably connected to one another in the region where the opposed longitudinal edges of the shells overlap. Clips may be situated anywhere along such a longitudinal edge.

The releasable connection may be effected by the provision of a clip arrangement. In such an embodiment the clip arrangement may include a clip of one of the shells and a clip receiving location of the other of the shells. The clip may include an arm, and the clip receiving location may be configured to receive a portion of the arm. The clip arm may include a barb, and the clip receiving location may comprise a recess of one of the shells. The recess may be an aperture. The recess may alternatively be a step or an edge. Such a feature may be supplemented by a complementary clip or eyelet attached to the opposing composite shell. In such an embodiment the clip arrangement may be releasable through manual manipulation of the clip arm. In another embodiment the clip arrangement may be releasable through indirect manipulation of the composite shell. Such a clip may be in plain sight or situated internally of the thermal insulation shroud and out of sight. One such embodiment of an alternative clip arrangement may be through geometric interlocking of two such composite shells overlapping one another.

The metallic surface of each shell may comprises a metal foil. The metal foil may be adhered to the composite material of the shell before curing of the composite material.

Each spacer element may preferably be adhered to an inner surface of the shell. The first and second shells may be releasably connectable to one another.

The at least one spacer element may be provided with a first or inner surface that conforms at least partially to the exterior shape of the fluid conduit, and a second or outer surface that conforms a least partially to the interior shape of the shell. The at least one spacer element may be mounted to an interior surface of the shell. The spacer elements of each shell may co-operate so as to define a spacer arrangement that extends fully around the conduit when the shells are connected to one another.

Preferably the opposed longitudinal edges of the first and second shells overlap one another. In such an embodiment the first and second shells may be connected to one another in the region where the opposed longitudinal edges of the shells overlap.

The connection may be effected by the provision of a hook and loop fastening arrangement. Alternatively, the connection may be effected by the provision of a clip arrangement. In such an embodiment the clip arrangement may include a clip of one of the shells and a clip receiving location of the other of the shells. The clip may include an arm, and the clip receiving location may be configured to receive a portion of the arm. The clip arm may include a barb, and the clip receiving location may comprise a recess of one of the shells. The recess may be an aperture.

The metallic surface may comprise a metal foil. In such an embodiment the metal foil may be adhered to the composite material of the shell before curing of the composite material.

The spacer element of each shell ensures, in use, the correct spacing of the shroud from the fluid conduit. The spacer element may be adhered to an inner surface of the shell.

The fluid conduit may be a pneumatic conduit or alternatively a hydraulic conduit. The first and second shells may be releasably connectable to one another.

The metal foil may be a polished metal foil. The metal foil is provided on the side of the shroud which, in use, faces the fluid conduit. The metal foil may comprise aluminium alloy.

Embodiments of the present invention will now be described with reference to the accompanying figures in which;
Figure 1 shows a perspective view of a thermal insulation shroud according to the present invention;
Figure 2 shows a side view of the thermal insulation shroud of figure 1;
Figure 3 shows a perspective view of the thermal insulation shroud separated into first and second components or shells;
Figure 4 shows a further perspective view of the thermal insulation shroud separated into first and second components;
Figure 5 shows a plan view of an alternative connection arrangement for the first and second components of a thermal insulation shroud;
Figure 6 shows a further plan view of the alternative connection arrangement for the first and second components of the thermal insulation shroud of figure 5;
Figure 7 shows a perspective view of the alternative connection arrangement of the thermal insulation shroud of figures 5 and 6;
Figure 8 shows a perspective view of a thermal insulation shroud according to the present invention;
Figure 9 shows a side view of the thermal insulation shroud of figure 8;
Figure 10 shows a perspective view of the thermal insulation shroud separated into first and second components;
Figure 11 shows a further perspective view of the thermal insulation shroud separated into first and second components;
Figure 12 shows a close up view of a clip of the shroud;
Figure 13 shows a perspective view of the thermal insulation shroud separated into first and second components and positioned adjacent a tubular fluid conduit;
Figure 14 shows the first and second components of the thermal insulation shroud positioned around a tubular fluid conduit;
Figure 15 shows a close up view of an alternative clip of the shroud;
Figure 16 shows a perspective view of the alternative clip;
Figure 17 shows a side view of a thermal insulation shroud having a silicone seal; and
Figure 18 shows a plan view of a female mould used to form a shell of the thermal insulation shroud.

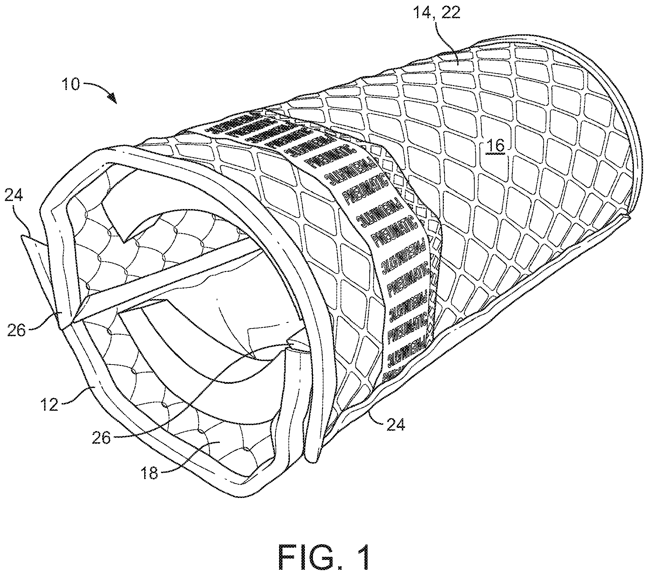

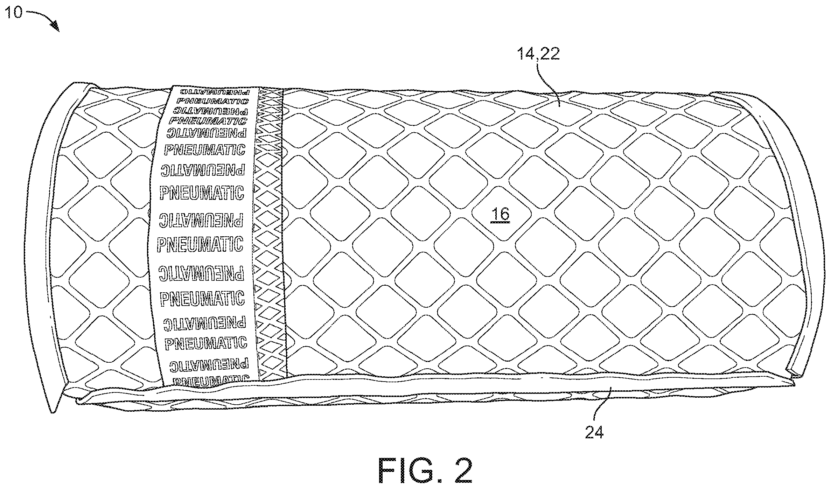

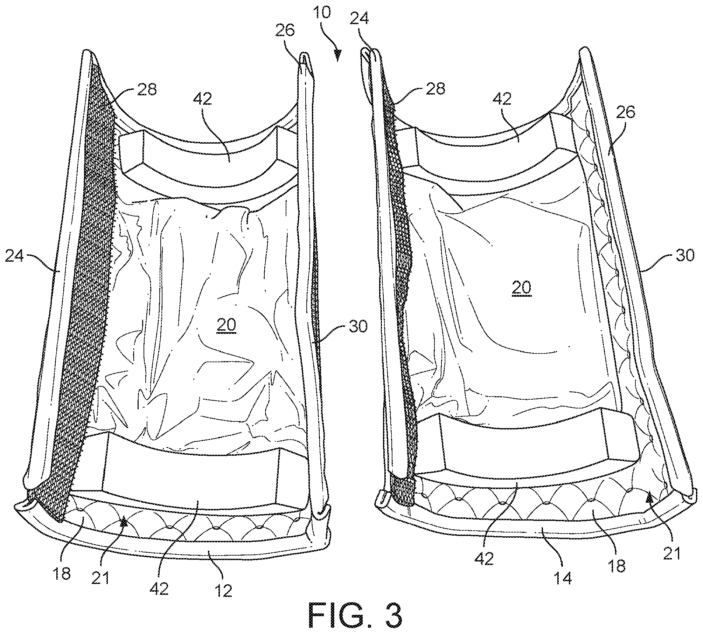

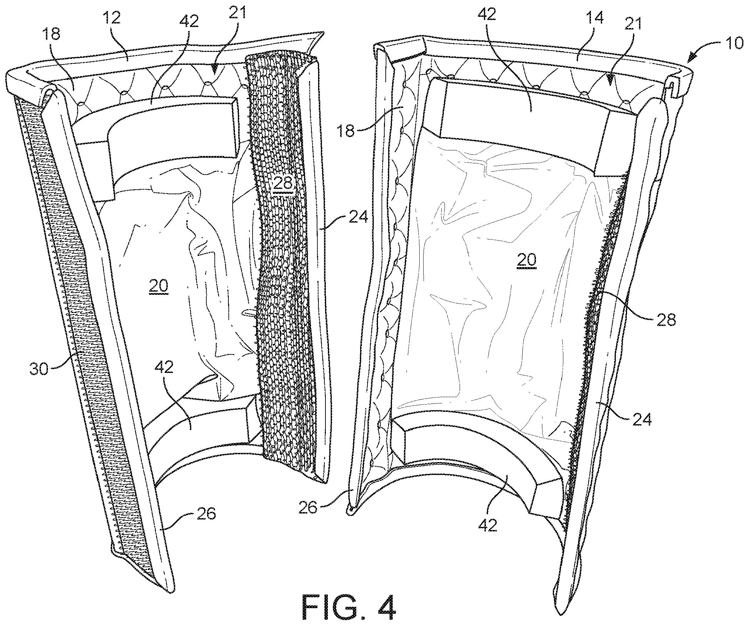

Referring firstly to figures 1 to 4 there is shown a thermal insulation shroud generally designated 10. In the embodiment shown, the shroud 10 is cylindrical and has a substantially constant diameter along its length. The shroud 10 is intended to fit to a fluid conduit (not shown) having a complementary configuration, i.e. cylindrical, and having a substantially constant diameter along its length, albeit with a smaller outer diameter than the inner diameter of the shroud 10. The fluid conduit may, in use, contain heated liquid and/or gas.

It will be appreciated that both the shroud 10 and its associated fluid conduit may have other configurations including, but not limited to, one or more of curved, branched, tapered or stepped.

The shroud 10 comprises first and second components hereinafter referred to as first and second shells 12, 14. Each shell 12,14 has a substantially identical configuration and is formed from a cured mat 16 of composite material. In the embodiment shown, the cured mat 16 is comprised of a woven fibre material and a resin. The fibre material may, for example, be a glass fibre material, a carbon fibre material, or an aramid fibre material. The resin may, for example, be a Phenolic, Cyanate ester, Polyfurfuryl alcohol, Epoxy, Bismaleimide or Polyimide resin. It will be appreciated that other types of woven material and resin may be utilised. In one embodiment of the invention the cured mat 16 mat be comprised of a 7781 woven glass fibre fabric of 300gsm with an 8HS weave. The resin matrix may consist of Poly Fufuryl alcohol of 42% resin by weight.

Each shell 12,14 may be formed on a tool such as a mandrel or former in a conventional manner by placing an uncured section of mat 16 over the tool and conforming the mat 16 to the external shape of the tool. The mat 16 is pre-impregnated with the resin. The mat 16 is then cured on the tool such that the cured mat 16 retains the external shape of the tool. Alternatively, the shells may be formed within a female mould.

As the mat 16 is pre-impregnated with resin, then the uncured mat 16 is typically supplied with removable protective films of plastic on opposing sides. These protective films are provided to protect the mat 16 from external contamination and damage, and allow the uncured mat 16 to be folded and rolled for the purpose of transport and storage. The protective films are removed from the uncured mat 16 prior to the uncured mat 16 being placed over the tool or within a mould.

In the embodiment shown, each shell 12,14 is textured with a repeating pattern of peaks and troughs. This pattern is provided on the tool and is applied to each shell 12,14 during curing of the mat 16. It will be understood that the shells 12,14 may be provided with an alternatively configured texture or no texture.

According to an aspect, the uncured mat 16 is provided on one side thereof a polished metal foil layer 18 in place of the usual removable plastic film. The metal foil layer 18 may, for example, comprise a layer of aluminum alloy having a thickness of approximately 16 microns. The metal foil layer 18 is not intended to be removed from the uncured mat 16, but instead is intended to be lie against the tool when the uncured mat 16 is placed against the tool. Alternatively, the metal foil layer 18 may lie face up when the uncured mat 16 is placed in a mould.

The metal foil 18 may be applied to the mat 16 during the impregnation of the resin to the mat 16. Application of the metal foil 18 to the mat 16 may be undertaken by the use of rollers.

The metal foil layer 18 serves the same initial purpose as the prior removable plastic film, i.e. to protect the pre-impregnated mat 16 during transport and storage. An advantage of the metal foil layer 18 is decrease in the preparation time of the uncured mat 16 prior to its application to a tool. It will be appreciated that a protective film requires removal from only one side of the mat 16 as opposed to two sides.

A further advantage of the metal foil layer 18 is to enhance the relesability of the cured mat 16 from the tool. Preparation of a tool typically includes thorough cleaning of the tool and the application of a release agent. It has been observed that metal foil layer 18 enables easier release of the cured mat 16 from the mandrel.

A further advantage of the metal foil layer 18 is realised when the shells 12,14 are fitted together to form a shroud 10, and the shroud 10 is placed around a conduit containing heated fluid. It will be understood that polished metal foil 18 of each shell 12,14 faces the external surface of the fluid conduit. The polished metal foil 18 can thus act to reflect thermal radiation and reduce heat transfer to the shroud 10.

As noted above, the shroud 10 is formed from two shells 12,14. Each shell 12, 14 has an internal side 21 which has the polished metal foil and, in use, faces the heated fluid conduit, and an external side 22 which faces away from the heated fluid conduit. In order to fit the shroud 10 to the heated fluid conduit, the shells 12, 14 are positioned such that they fully surround the heated fluid conduit before being joined to one another.

The shells 12,14 are provided with an integrated fastening mechanism which allow the shells 12,14 to be connected to one another for ease of installation around a conduit. The shells 12,14 may, for example, be releasably connectable to one another. In order to achieve this, the opposing longitudinal edges 24,26 of each shell 12,14 are provided with complementarily configured connection arrangements. In the embodiment shown in figures 1 to 4, the longitudinal edges 24, 26 are provided with strips 28,30 of hook and loop fastening material. As can be seen from figure 1, the opposing longitudinal edges 24,26 of the shells 12,14 overlap one another when forming the shroud 10. On each shell 12,14 a first strip 28 of the hook and loop fastening material is provided on the internal side 20 of the shell 12,14, and a second strip 30 of hook and loop fastening material is provided on the external side 22 of the shell 12,14. Where hook and loop fastening material is not provided, the opposing longitudinal edges 24,26 of the shells 12, 14 still overlap one another in the manner described and shown in the figures.

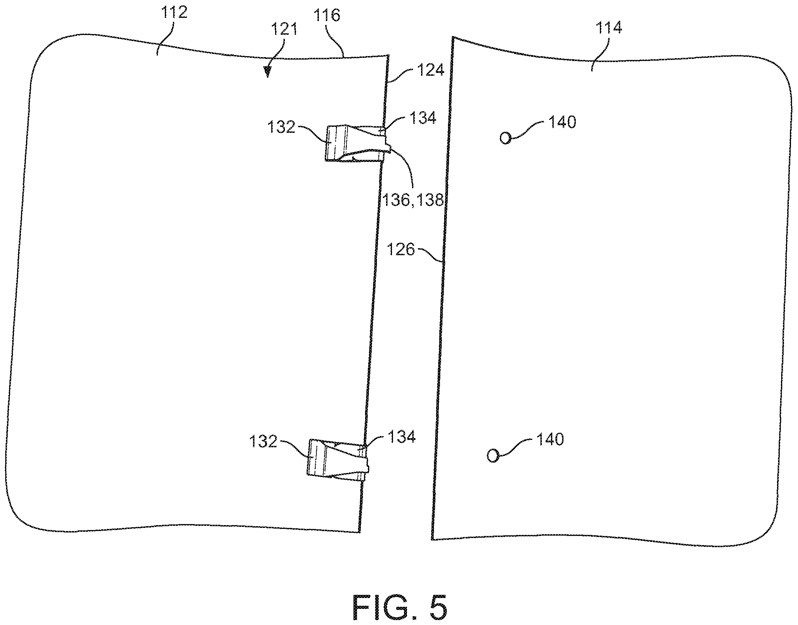

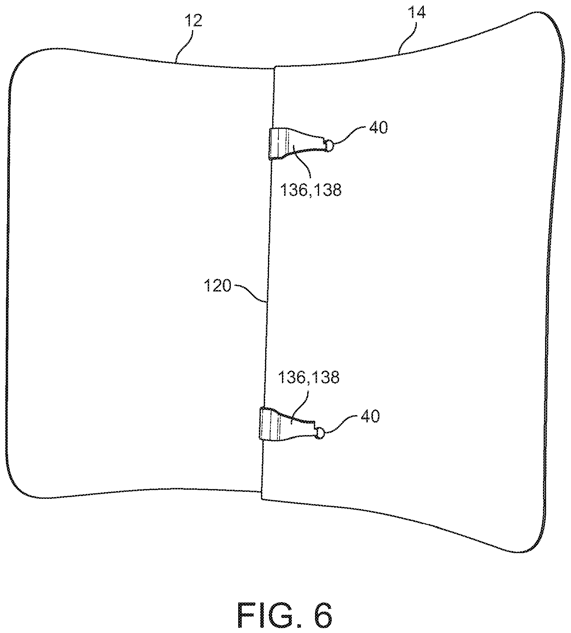

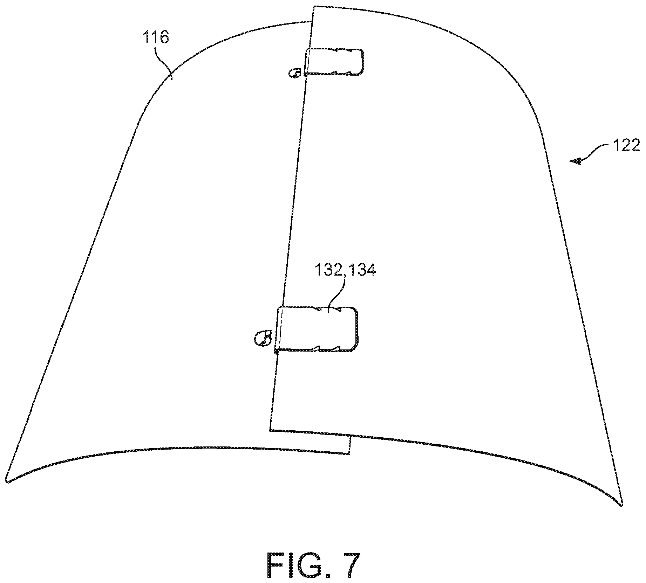

Referring now to figures 5 to 7 there is shown an alternative integrated fastening system. Features common to the embodiment described with reference to figures 1 to 4 are identified with like reference numerals prefixed with "1".

As before, the shroud 10 is formed from two shells 112,114. Each shell 112,114 has opposed longitudinal edges 124,126. Instead to the previously described strips of hook and loop fastening material, the fastening system of figures 5 to 7 comprises a clip arrangement. A longitudinal edge 124 of a first shell 112 is provided with a pair of spaced metal clips 132. It will be appreciated that a greater number of clips 132 may be used. Each clip 132 includes a generally "U" shaped body 134 within which the longitudinal edge 124 of the shell 112 is received. The clip 132 is fitted to the edge of the pre-impregnated mat 116 from which the shell 112 is formed prior to curing of the mat 116. The clip 132 thus becomes attached to the shell 112 during curing of the mat 116.

Each clip 132 further included a spring arm 136 which extends from the side of the clip body 134 which, in use, is on the internal side 120 of the shell 112. The spring arm 136 is provided with a barb 138. In an alternative embodiment, not shown, the spring arm 136 may extend from the side of the clip body 134 which, in use, is on the external 122 side of the shell 112.

A longitudinal edge 126 of the second shell 114 is provided with a pair of apertures 140 which are spaced so as to align with the barbs 138 of the clips 132. In use, the longitudinal edge 126 of the second shell 114 is positioned so as to overlap the longitudinal edge 124 of the first shell 114, and the barbs 138 of the clips 132 are received in the apertures 140 of the second shell 114.

According to another aspect the shells 12,14 shown in figures 1 to 4 are provided with an integrated spacing arrangement. The spacing arrangement is provided to ensure that the internal side 21 of each shell 12,14 stands off from the external surface of the heated fluid conduit by a desired distance. As noted in the introduction above, the spacing of a shroud from a fluid conduit is typically achieved by the provision of circumferential spacer bands that are first fitted to the fluid conduit. In the embodiment shown, correct spacing of the shroud 10 from the fluid conduit is achieved by the provision of hemicircular shaped spacer elements 42 which are connected to the internal side 21 of each shell 12,14 during manufacture thereof. The spacer elements 42 are formed from a temperature resistant plastic material. The spacer elements 42 may, for example, be formed from silicone rubber. The spacer elements 42 may, for example, be adhesive backed so as to enable their attachment to the internal side 21 of each shell 12,14.

The shells 12, 14 are further provided with sections of flexible thermal insulation 20 which are located between the spacer elements 42. The thermal insulation sections 20 are mounted to the internal side 21 of each shell 12,14. The thermal insulation material of the thermal insulation sections 20 may comprise, for example, a fibrous insulation material, foamed insulation material or microporous insulation material.

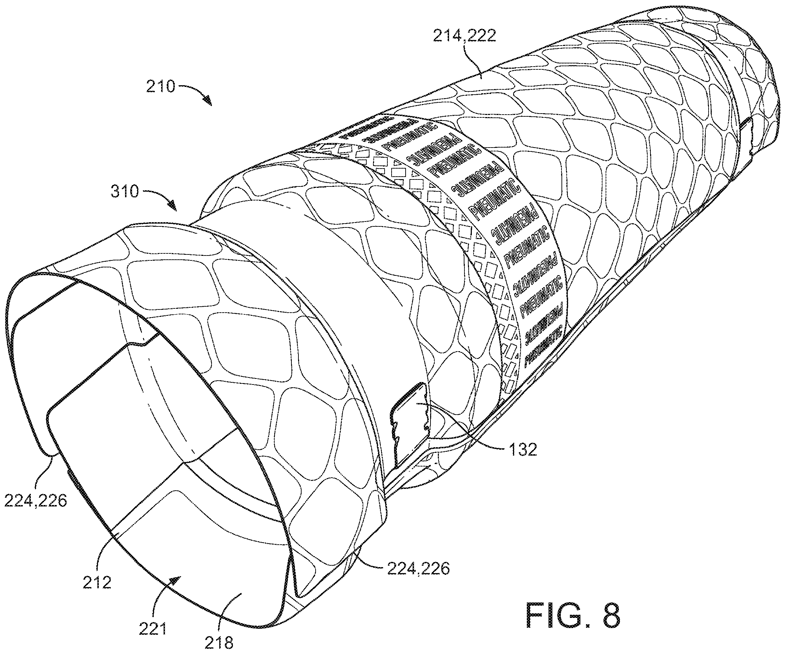

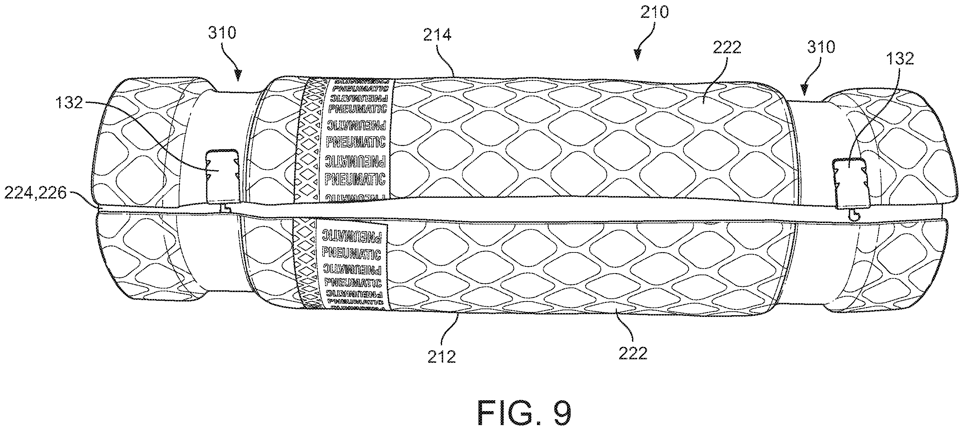

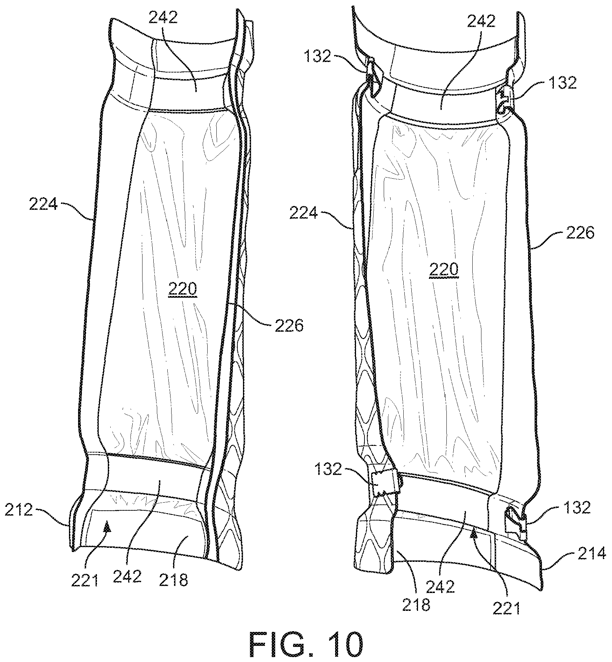

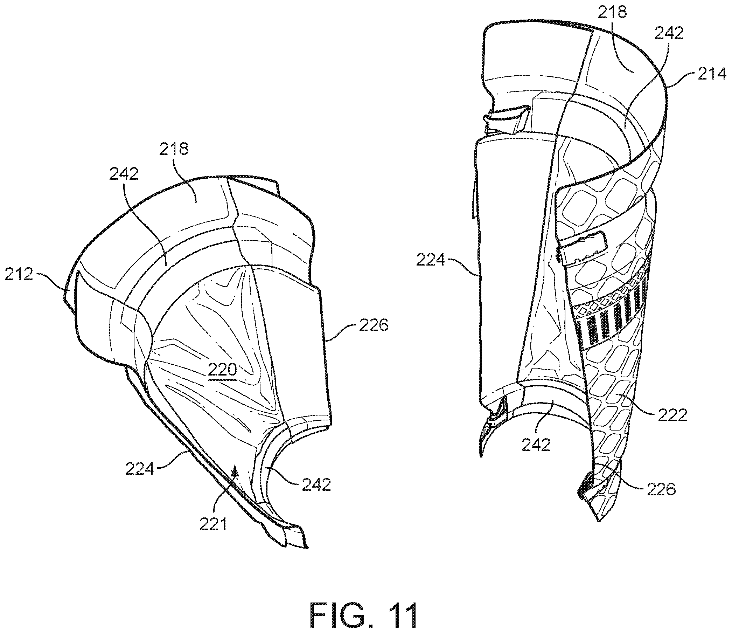

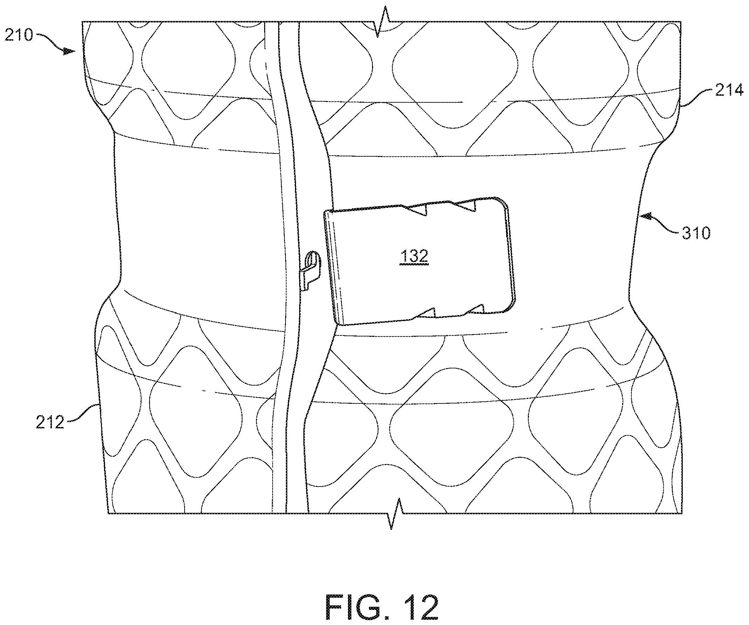

Referring now to figures 8 to 14 there is shown an alternative thermal insulation shroud, generally designated 210. Features common to the embodiment described with reference to figures 1 to 4 are identified with like reference numerals prefixed with "2".

In the embodiment shown, the shroud 210 is cylindrical and has a substantially constant diameter along its length. The shroud 210 is intended to fit to a fluid conduit (not shown) having a complementary configuration, i.e. cylindrical, and having a substantially constant diameter along its length, albeit with a smaller outer diameter than the inner diameter of the shroud 210. The fluid conduit may, in use, contain heated fluid.

It will be appreciated that both the shroud 210 and its associated conduit may have other configurations including, but not limited to, one or more of curved, branched, tapered or stepped.

The shroud 210 comprises first and second components hereinafter referred to as first and second shells 212, 214. Each shell 212,214 has a substantially identical configuration and is formed from a cured mat 216 of composite material. In the embodiment shown, the cured mat 216 is comprised of a woven fibre material and a resin. The fibre material may, for example, be a glass fibre material, a carbon fibre material, or an aramid fibre material. The resin may, for example, be a Phenolic, Cyanate ester, Polyfurfuryl alcohol, Epoxy, Bismaleimide or Polyimide resin. It will be appreciated that other types of woven material and resin may be utilised. In one embodiment of the invention the cured mat 216 mat be comprised of a 7781 woven glass fibre fabric of 300gsm with an 8HS weave. The resin matrix may consist of Poly Fufuryl alcohol of 42% resin by weight.

Each shell 212,214 may be formed on a tool such as a mandrel or former in a conventional manner by placing an uncured section of mat 216 over the tool and conforming the mat 216 to the external shape of the tool. The mat 216 is pre-impregnated with the resin. The mat 216 is then cured on the tool such that the cured mat 216 retains the external shape of the tool. Alternatively, the shells 212,214 may be formed within a female mould.

As the mat 216 is pre-impregnated with resin, then the uncured mat 216 is typically supplied with removable protective films of plastic on opposing sides. These protective films are provided to protect the mat 216 from external contamination and damage, and allow the uncured mat 216 to be folded and rolled for the purpose of transport and storage. The protective films are removed from the uncured mat 216 prior to the uncured mat 216 being placed over the tool or within a mould.

In the embodiment shown, each shell 212, 214 is textured with a repeating pattern of peaks and troughs. This pattern is provided on the tool and is applied to each shell 212,214 during curing of the mat 216. It will be understood that the shells 212,214 may be provided with an alternatively configured texture or no texture.

According to an aspect, the uncured mat 216 is provided on one side thereof a polished metal foil layer 218 in place of the usual removable plastic film. The metal foil layer 218 may, for example, comprise a layer of aluminum alloy having a thickness of approximately 16 microns. The metal foil layer 218 is not intended to be removed from the uncured mat 216, but instead is intended to be lie against the tool when the uncured mat 216 is placed against the tool. Alternatively, the metal foil layer 218 may lie face up when the uncured mat 216 is placed in a mould.

The metal foil 218 may be applied to the mat 216 during the impregnation of the resin to the mat 216. Application of the metal foil 218 to the mat 216 may be undertaken by the use of rollers.

The metal foil layer 218 serves the same initial purpose as the prior removable plastic film, i.e. to protect the pre-impregnated mat 216 during transport and storage. An advantages of the metal foil layer 218 include a decrease in the preparation time of the uncured mat 216 prior to its application to a tool. It will be appreciated that a protective film requires removal from only one side of the mat 216 as opposed to two sides.

A further advantage of the metal foil layer 218 is to enhance the relesability of the cured mat 216 from the tool. Preparation of a tool typically includes thorough cleaning of the tool and the application of a release agent. It has been observed that metal foil layer 218 enables easier release of the cured mat 216 from the mandrel.

A further advantage of the metal foil layer 218 is realised when the shells 212,214 are fitted together to form a shroud 210, and the shroud 210 is placed around a heated fluid conduit. It will be understood that polished metal foil 218 of each shell 212,214 faces the external surface of the heated fluid conduit. The polished metal foil 218 can thus act to reflect thermal radiation and reduce heat transfer to the shroud 210.

As noted above, the shroud 210 is formed from two shells 212,214. Each shell 212, 214 has an internal side 221 which has the polished metal foil and, in use, faces the heated fluid conduit, and an external side 222 which faces away from the heated fluid conduit. In order to fit the shroud 210 to the heated fluid conduit, the shells 212, 214 are positioned such that they fully surround the heated fluid conduit before being joined to one another.

The shells 212,214 are provided with an integrated fastening mechanism which allow the shells 212,214 to be connected to one another for ease of installation around a conduit. The shells 212,214 may, for example, be releasably connectable to one another. In order to achieve this, the opposing longitudinal edges 224,226 of each shell 212,214 are provided with complementarily configured connection arrangements. As can be seen from the figures, the opposing longitudinal edges 224,226 of the shells 212,214 overlap one another when forming the shroud 210. The shroud 210 described with reference to figures 8 to 14 is provided with a clips 132 described with reference to figures 5 to 7 above.

The shells 212,214 are provided with an integrated spacing arrangement. The spacing arrangement is provided to ensure that the internal side 221 of each shell 212,214 stands off from the external surface of the heated fluid conduit by a desired distance. As noted in the introduction above, the spacing of a shroud 210 from a fluid conduit is typically achieved by the provision of circumferential spacer bands that are first fitted to the fluid conduit. In the embodiment shown, correct spacing of the shroud 210 from the fluid conduit is achieved by the provision of hemicircular shaped spacer elements 242 which are connected to the internal side 221 of each shell 212,214 during manufacture thereof. The spacer elements 242 are formed from a temperature resistant plastic material. The spacer elements 242 may, for example, be formed from silicone rubber. The spacer elements 242 may, for example, be adhesive backed so as to enable their attachment to the internal side 221 of each shell 212,214.

The shells 212, 214 are further provided with sections of flexible thermal insulation 220 which are located between the spacers 242. The thermal insulation sections 220 are mounted to the internal side 221 of each shell 212,214.

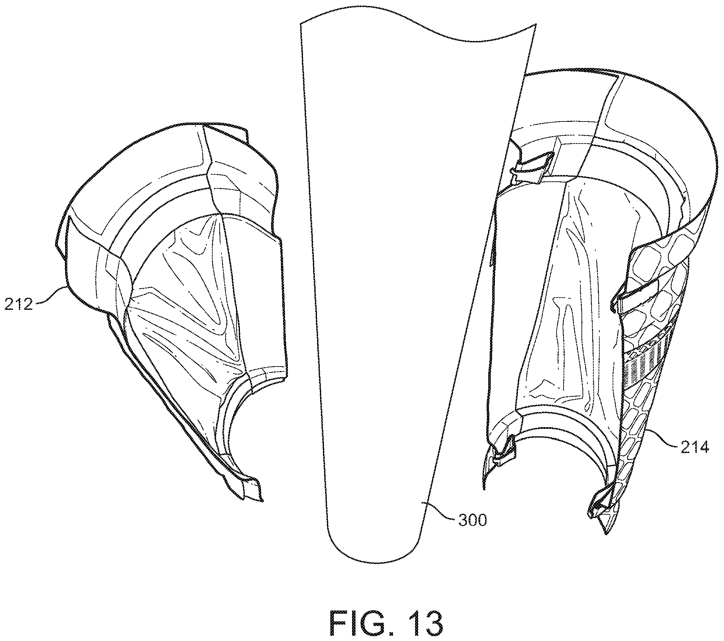

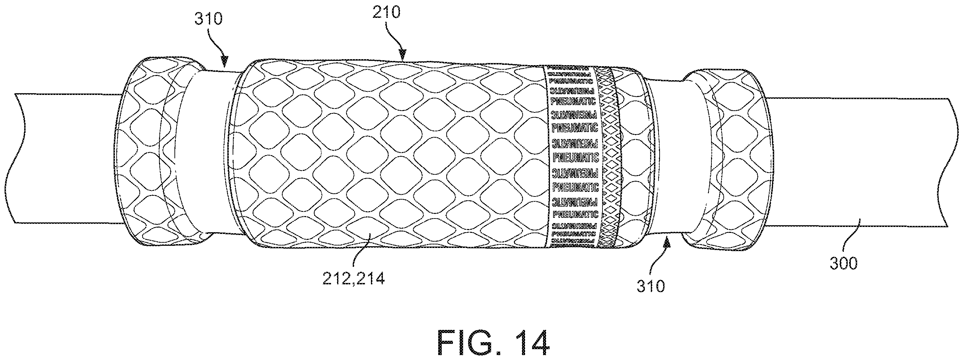

Figures 13 and 14 show how the shells 212, 214 may be fitted to a fluid conduit 300. The shells 212,214 are positioned on opposing sides of the conduit 300 (figure 13) and then clipped together do as to form a shroud 210 that surrounds a portion of the conduit 300 (figure 14). As can be seen in figure 14, the external surface of the shroud 210 is provided with spaced apart recesses 310 that extend around the outer circumference of the shroud 310. The location of the recesses 310 correspond to the position of the spacers 242 on the internal side 221 of each shell 212, 214. If required, further circumferential fixing bands (not shown), for example metal bands, may be fitted around the shroud 210 and located in the recesses 310.

The fluid conduit 300 may contain a heated gas, a heated liquid or the heated combination of gas and liquid. The term fluid may also encompass heated flowable materials comprised at least in part of a solid phase including, for example, slurries and suspensions.

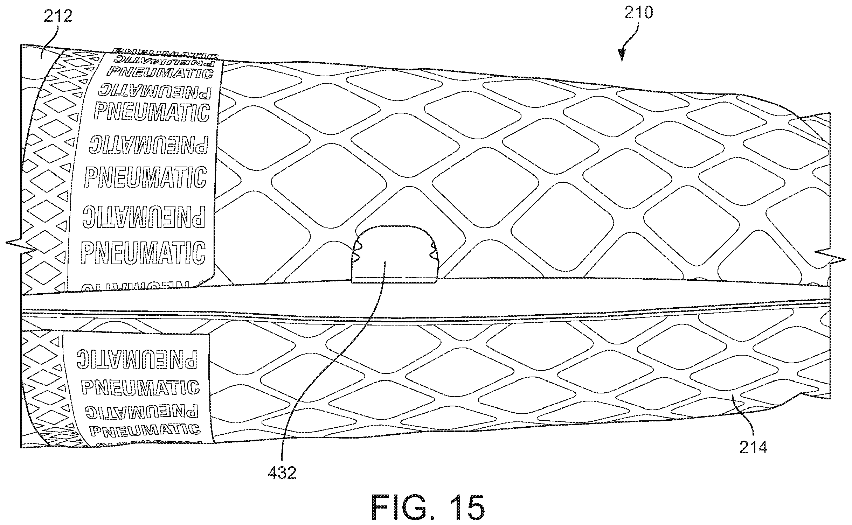

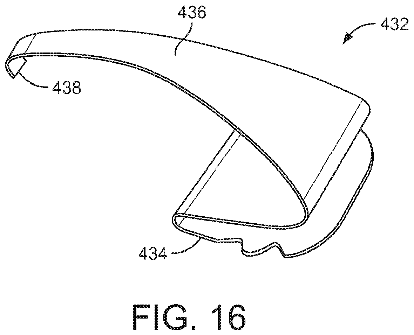

Figures 15 and 16 show an alternative embodiment of a clip 432 which may be utilised for the connection of the shells 212,214 to each other. As with the clip 132 described with reference to figures 5 to 7, the clip 432 includes a generally "U" shaped body 434 within which the longitudinal edge of the shell 212,214 is received. The clip 432 is show fitted over the longitudinal edge of the shell 212,21 and thus is not integrated into the shell 212,214. This arrangement is shown for the purposes of illustration only and in use the clip 432 would be integrated into the shell 212,214 during curing.

The clip 432 further included a spring arm 436 which extends from the side of the clip body 434 which, in use, is disposed on the internal side 221 of the shell 212,214. The spring arm 436 is provided with a barb 438. The barb 438, in use, engages a connection feature provided on the internal side of the shell 212,214.

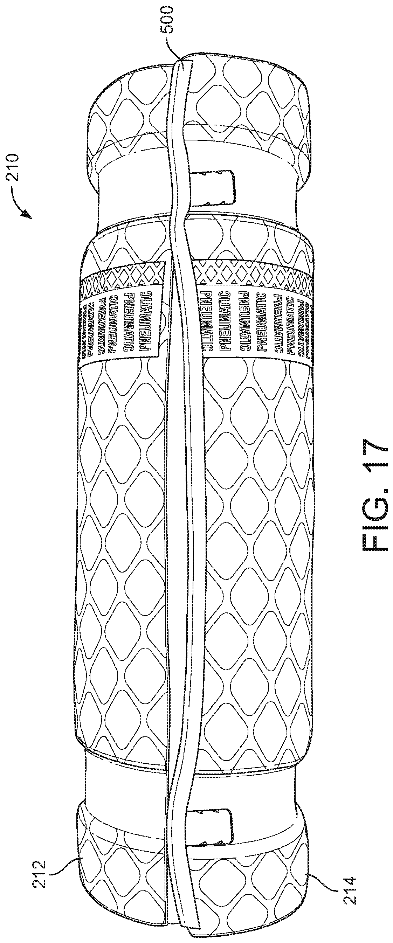

Figure 17 shows the use of a silicone sealing strip 500 which may be provided on the longitudinal edges of the shells 212,214. The sealing strip 500 is compressible and forms a fluid tight seal between the shells 212, 214 when they are fitted together.

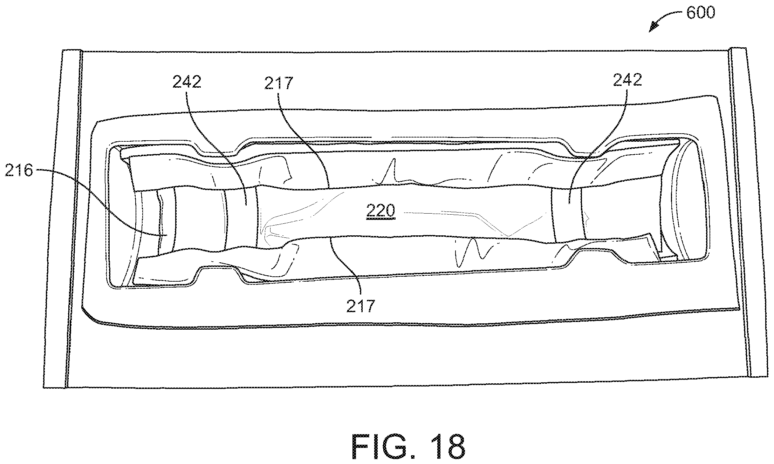

Figure 18 shows a view of a female mould 600 that may be utilised to from a shell 212. The shell 212 is formed by first laying section of uncured mat 216 into the mould 600 with the metal foil surface of the mat 216 uppermost. The mat 216 is cut oversize such that the longitudinal edges 217 of the mat 216 extend out of the mould 600. A section of flexible thermal insulation 220 is then laid against the metal foil surface. This thermal insulation 220 is thereafter overlaid with a sheet of material. This sheet of material may be polymeric in nature such as polyimide, or chemically reactive such as a pre-impregnated composite sheet. The sheet may have a scrim adhered to it for additional strength.

The spacer elements 242 are then placed in the mould 600 so as to overlie the edges of flexible thermal insulation 220 and the overlying sheet of material. The longitudinal edges 217 of the mat 216 are then folded into the mould 600 so as to partially overlie the flexible thermal insulation 220 and its overlying sheet, and the spacer elements 242. The mat 216 is the cured so as to form the shell 212 and encapsulate the flexible thermal insulation 220 and the spacer elements 242. The longitudinal edges 217 of the mat 216 in the cured shell 212 define shallow lips or ledges which may be engaged by a clips of the shroud 210 in order to retain the shells 121,214 in association with one another.

The integrated spacer elements 242 are provided at regular intervals along the length of the shells 212,214. When the shells 212,214 are fitted together, the spacer elements 242 co-operate to define an annular spacer that contacts the conduit and extends around the circumference of the conduit. The annular spacers formed by the spacer elements 242 of the shells 212,214 thus section off discrete interior spaces between the shroud 210 and the conduit. This gives rise to interstitial spaces between shroud 210 and conduit. Filling such interstitial spaces is a thermal insulation 220. This thermal insulation adds to thermal efficiency and prevents hot spots forming from buoyant flow of air between the conduit and the shroud 210.

The metallic surface of the composite shell 212 is the inside surface of the fold, this allows low friction sheets like polyimide to partially slide out to ensure the optimum amount of sheet is available to allow the composite shell 212 during the curing of the out of oven vacuum bagging process to fully conform to the mould or tool being used. The remainder of the sheet edge is then held captive in the folding edge. At intervals along the composite shell 212 the spacer elements 242 sit on top of the sheet of material and are then also held captive by the folding edge 217 of the composite shell 212. An alternative embodiment may consist of curing the composite shell 212 with correctly shaped folding edges 217 and then placing the insulation 220, sheet and spacer elements 242 in after cure. One embodiment may use the folding longitudinal edge 217 of the mat 216 of the composite shell 212 for secure integration of an electrical wire for a pressure sensor built into the shroud 210.

While aspects of the present invention have been described with reference to heated fluid conduits of aircraft, it will be understood that thermal insulation shrouds of the type described may be used in combination with other types of heated fluid conduit. Such heated fluid conduits may, for example, be found in other vehicle types, or in manufacturing locations, chemical processing locations and the like.

## Claims

1. A thermal insulation shroud (10) for a fluid conduit, the shroud comprising first and second shells (12, 14) which are connectable to one another so as to surround the fluid conduit, wherein each shell is formed from a cured composite material, wherein the cured composite material of each shell includes an inner metallic surface (18)
that, in use, faces the fluid conduit to which the thermal insulation shroud is fitted, and wherein each shell is further provided with at least one spacer element (42) for maintaining a desired spacing between the fluid conduit and the inner metallic surface of each shell.

2. A thermal insulation shroud (10) as claimed in claim 1, wherein opposed longitudinal edges (24, 26) of the first and second shells (12, 14) overlap one another.

3. A thermal insulation shroud (10) as claimed in claim 2, wherein the first and second shells (12, 14) are connected to one another in the region where the opposed longitudinal edges (24, 26) of the shells overlap.

4. A thermal insulation shroud (10) as claimed in claim 3, wherein the connection is effected by the provision of a clip arrangement.

5. A thermal insulation shroud (10) as claimed in claim 4, wherein the clip arrangement includes a clip (132) of one of the shells (12, 14) and a clip receiving location of the other of the shells.

6. A thermal insulation shroud (10) as claimed in claim 5, wherein the clip (132) includes an arm (136) and the clip receiving location is configured to receive a portion of the arm.

7. A thermal insulation shroud (10) as claimed in claim 6, wherein the clip arm (136) includes a barb, and the clip receiving location comprises a recess of one of the shells.

8. A thermal insulation shroud (10) as claimed in claim 7, wherein the recess is an aperture (140).

9. A thermal insulation shroud (10) as claimed in claim 6, wherein the clip receiving location comprises am internal lip or ledge of the shell.

10. A thermal insulation shroud (10) as claimed in any preceding claim, wherein the metallic surface comprises a metal foil (18).

11. A thermal insulation shroud (10) as claimed in claim 10, wherein the metal foil (18) is adhered to the composite material of the shell before curing of the composite material.

12. A thermal insulation shroud (10) as claimed in any preceding claim, wherein each spacer element (42) is adhered to an inner surface of the shell.

13. A thermal insulation shroud (10) as claimed in any preceding claim wherein the first and second shells (12, 14) are releasably connectable to one another.

14. A thermal insulation shroud (10) as claimed in any preceding claim, wherein the at least one spacer element (42) is provided with a first or inner surface that conforms at least partially to the exterior shape of the fluid conduit, and a second or outer surface that conforms a least partially to the interior shape of a shell.

15. A thermal insulation shroud (10) as claimed in claim 14, wherein the at least one spacer element (42) is mounted to an interior surface of the shell.

## Patentansprüche

1. Wärmeisolierende Verkleidung (10) für eine Fluidleitung, die Verkleidung einen ersten und einen zweiten Mantel (12, 14) umfassend, die miteinander verbindbar sind, um die Fluidleitung zu umschließen, wobei jeder Mantel aus einem gehärteten Verbundstoff geformt ist, wobei
der gehärtete Verbundstoff jedes Mantels eine Innenfläche aus Metall (18) umfasst, die, bei Gebrauch, zur Fluidleitung weist, an der die wärmeisolierende Verkleidung angebracht ist, und wobei jeder Mantel ferner mit mindestens einem Distanzstück (42) versehen ist, um einen gewünschten Abstand zwischen der Fluidleitung und der Innenfläche aus Metall
jedes Mantels zu halten.

2. Wärmeisolierende Verkleidung (10) nach Anspruch 1, wobei gegenüberliegende Längskanten (24, 26) des ersten und des zweiten Mantels (12, 14) einander überlappen.

3. Wärmeisolierende Verkleidung (10) nach Anspruch 2, wobei der erste und der zweite Mantel (12, 14) miteinander in der Region verbunden sind, in der sich die gegenüberliegenden Längskanten (24, 26) der Mäntel überlappen.

4. Wärmeisolierende Verkleidung (10) nach Anspruch 3, wobei die Verbindung über die Bereitstellung einer Clip-Anordnung bewirkt wird.

5. Wärmeisolierende Verkleidung (10) nach Anspruch 4, wobei die Clip-Anordnung einen Clip (132) an einem der Mäntel (12, 14) und eine Clip-aufnehmende Stelle an dem anderen der Mäntel umfasst.

6. Wärmeisolierende Verkleidung (10) nach Anspruch 5, wobei der Clip (132) einen Arm (136) umfasst und die Clip-aufnehmende Stelle dafür ausgelegt ist, einen Abschnitt des Arms aufzunehmen.

7. Wärmeisolierende Verkleidung (10) nach Anspruch 6, wobei der Clip-Arm (136) einen Widerhaken umfasst und die Clip-aufnehmende Stelle eine Vertiefung an einem der Mäntel umfasst.

8. Wärmeisolierende Verkleidung (10) nach Anspruch 7, wobei die Vertiefung eine Öffnung (140) ist.

9. Wärmeisolierende Verkleidung (10) nach Anspruch 6, wobei die Clip-aufnehmende Stelle eine interne Lippe oder ein Vorsprung des Mantels ist.

10. Wärmeisolierende Verkleidung (10) nach einem der vorstehenden Ansprüche, wobei die Fläche aus Metall eine Metallfolie (18) umfasst.

11. Wärmeisolierende Verkleidung (10) nach Anspruch 10, wobei die Metallfolie (18) auf den Verbundstoff des Mantels geklebt wird, bevor der Verbundstoff gehärtet wird.

12. Wärmeisolierende Verkleidung (10) nach einem der vorstehenden Ansprüche, wobei jedes Distanzstück (42) auf eine Innenfläche des Mantels geklebt wird.

13. Wärmeisolierende Verkleidung (10) nach einem der vorstehenden Ansprüche, wobei der erste und der zweite Mantel (12, 14) lösbar miteinander verbunden werden können.

14. Wärmeisolierende Verkleidung (10) nach einem der vorstehenden Ansprüche, wobei das mindestens eine Distanzstück (42) mit einer ersten oder innenliegenden Fläche bereitgestellt wird, die zumindest teilweise der äußeren Form der Fluidleitung entspricht, und einer zweiten oder außenliegenden Fläche, die zumindest teilweise der inneren Form eines Mantels entspricht.

15. Wärmeisolierende Verkleidung (10) nach Anspruch 14, wobei das mindestens eine Distanzstück (42) an einer Innenfläche des Mantels angebracht ist.

## Revendications

1. Enveloppe d'isolation thermique (10) pour un conduit de fluide, l'enveloppe comprenant une première et une seconde coque (12, 14) qui peuvent être reliées l'une à l'autre de manière à entourer le conduit de fluide,
- chaque coque étant formée de matière composite durcie,
- la matière composite durcie de chaque coque a une surface intérieure métallique (18) qui, en position d'utilisation, est face au conduit de fluide et équipée de l'enveloppe d'isolation thermique, et
- chaque coque est en outre munie d'au moins un élément d'écartement (42) pour maintenir un certain écartement entre la conduite de fluide et la surface métallique intérieure de chaque coque.

2. Enveloppe d'isolation thermique (10) selon la revendication 1,
dans laquelle
les bords longitudinaux opposés (24, 26) de la première et de la seconde coques (12, 14) se chevauchent l'un l'autre.

3. Enveloppe d'isolation thermique (10) selon la revendication 2,
dans laquelle
la première et la seconde coque (12, 14) sont reliées l'une à l'autre dans la région dans laquelle les bords longitudinaux opposés (24, 26) des coques se chevauchent.

4. Enveloppe d'isolation thermique (10) selon la revendication 3,
dans laquelle
la connexion se fait avec un dispositif à pince.

5. Enveloppe d'isolation thermique (10) selon la revendication 4,
dans laquelle
le dispositif à pince comprend une pince (132) à l'une des coques (12, 14) et une position recevant la pince de l'autre des coques.

6. Enveloppe d'isolation thermique (10) selon la revendication 5,
dans laquelle
la pince (132) a un bras (136) et la position recevant la pince est configurée pour recevoir une partie du bras.

7. Enveloppe d'isolation thermique (10) selon la revendication 6,
dans laquelle
le bras de la pince (136) a une barbe et la position recevant la pince a une cavité pour l'une des coques.

8. Enveloppe d'isolation thermique (10) selon la revendication 7,
dans laquelle
la cavité est une ouverture (140).

9. Enveloppe d'isolation thermique (10) selon la revendication 6,
dans laquelle
la position recevant la pince a une lèvre interne ou un bord de coque.

10. Enveloppe d'isolation thermique (10) selon l'une quelconque des revendications précédentes,
dans laquelle
la surface métallique comprend une feuille de métal (18).

11. Enveloppe d'isolation thermique (10) selon la revendication 10, dans laquelle
l'enveloppe métallique (18) est collée à la matière composite de la coque avant de durcir la matière composite.

12. Enveloppe d'isolation thermique (10) selon l'une quelconque des revendications précédentes,
dans laquelle
chaque élément d'écartement (42) est collé à la surface intérieure de la coque.

13. Enveloppe d'isolation thermique (10) selon l'une quelconque des revendications précédentes,
dans laquelle
la première et la seconde coque (12, 14) sont reliées de manière amovible l'une à l'autre.

14. Enveloppe d'isolation thermique (10) selon l'une quelconque des revendications précédentes,
dans laquelle
au moins un élément d'écartement (42) a une première surface ou surface intérieure qui est conforme au moins partiellement à la forme extérieure du conduit de fluide et une seconde ou autre surface qui se conforme au moins partiellement à la forme intérieure de la coque.

15. Enveloppe d'isolation thermique (10) selon la revendication 14,
dans laquelle
le premier élément d'écartement (42) est monté sur une surface intérieure de la coque.
